**Europäisches Patentamt**

**European Patent Office**

**Office européen des brevets**

(19)

(11) Publication number : **0 405 385 B1**

(12)

# EUROPEAN PATENT SPECIFICATION

(45) Date of publication of patent specification :
23.12.92 Bulletin 92/52

(51) Int. Cl.⁵ : **A01C 17/00, G01G 19/08**

(21) Application number : **90112012.1**

(22) Date of filing : **25.06.90**

(54) **Appliance for distribution of fertilizer.**

(30) Priority : **26.06.89 DK 3164/89**

(43) Date of publication of application :
**02.01.91 Bulletin 91/01**

(45) Publication of the grant of the patent :
**23.12.92 Bulletin 92/52**

(84) Designated Contracting States :
**AT DE DK ES FR GB IT NL SE**

(56) References cited :
**AT-B- 381 523**
**FR-A- 2 237 563**
**US-A- 3 857 452**
**US-A- 4 635 739**

(73) Proprietor : **A.P. Laursen A/S**
**Fabriken Bogballe**
**DK-7171 Uldum (DK)**

(72) Inventor : **Nielsen, Thorkild**
**Uranusvej 31**
**DK-7100 Vejle (DK)**

(74) Representative : **Roerboel, Leif et al**
**BUDDE, SCHOU & CO. A/S Sundkrogsgade 10**
**DK-2100 Copenhagen O (DK)**

EP 0 405 385 B1

Jouve, 18, rue Saint-Denis, 75001 PARIS

## Description

This invention relates to an appliance for distribution of fertilizer and comprises a dump body which is pivotally deposited in a frame at the rear edge of the dump body whereby, by activation of at least one lifting-lowering cylinder fastened at one end to said dump body and at the other end to the frame, the fertilizer is successively emptied into a spreading aggregate mounted in the frame. Such an apptearce is known from FR-A-2 237 563.

As a consequence of the still advancing automation in combination with the need for a more exact guidance of distribution of fertilizer in a correct quantity per area unit and in an even dispersion over the total area, a need has arisen for during the driving and the emptying to be able to register by a dynamic measuring the quantity of fertilizer on the dump body and in the spreading aggregate. In a calculating unit, the instantaneous weight of the remaining quantity of fertilizer can be used for control of the dispersed quantity of fertilizer per area unit, when the calculating unit furthermore is provided with data concerning the distance covered. In this manner, a very direct and consequently reliable registering of the basal parameter when spreading out the fertilizer is achieved, namely the quantity per area unit.

In the known appliances of the type mentioned above, it is not possible immediately to register the remaining weight. The main reason for this is the lifting-lowering cylinders between the wheeled chassis and the dump body. If conventional double-acting lifting-lowering cylinders are to be used, these must be placed at a determined angle to the dump body in position of rest, namely about 45°, and the cylinders must have a certain length in order to be capable of leading the dump body to the top tipping position.

It is the object of the invention to show a constructively simple solution of the problem by momentarily registering the remaining weight of fertilizer on the dump body and in the spreading aggregate without substantial change of the basis construction of the known appliances and without using complicated suspension systems.

This object is achieved in an appliance of the type mentioned in the introduction and characterized in that the frame is carried by a chassis, inasmuch as sensors are placed between the frame and the chassis, said sensors arranged to detect the force component transmitted between frame and chassis.

By dividing the supporting construction partly in a frame supporting the dump body and the spreading aggregate, and partly in a wheeled chassis, a possibility is obtained of placing sensors in the supporting points between frame and chassis and thereby a possibility of exactly registering the weight of the frame and the parts suspended there. The fastening of the cylinders in the frame removes the source of error that would have existed if the cylinders were fastened to the wheeled chassis in a conventional manner.

In a preferred embodiment of an appliance according to the invention, a lifting-lowering cylinder is placed at each side of the dump body, and the cylinders are pivotally fastened to the bottom side of the body in a joint and to a cross member in the frame in the area above the ground and the bottom side of the chassis.

In this way a possibility is achieved to use standard cylinders which are fastened to the bottom side of the dump body and to the cross member in a conventional manner by means of the prescribed bolts and pin connections. At the same time it is achieved that a conventional chassis of the grating type containing a longitudinal power transmission axle from the tractor's power take-off to the spreading aggregate can be used.

According to the invention, the frame can consist of a main frame running mainly at a horizontal level, in which frame the dump body and the spreading aggregate are pivotally deposited and supported, and of a mainly vertical part projecting downwards which runs through the wheeled chassis and is connected to a cross member under the chassis transversely across the driving direction.

In this way, a possibility is obtained of placing the cylinders substantially in the same area as is the case in the conventional appliances, inasmuch as the vertical downwards extending part of the frame can be led in between the grate bars of the chassis and past the power transmission axle. The free distance between the bottom of the chassis and the ground is reduced only by the height of the profile that is the cross member.

According to the invention, the lifting-lowering cylinders can form an angle of mainly 45° to horizontal, when the dump body rests on the frame and the cylinders are in their in-drawn position.

In this way a suitable compromise between the least possible vertical extension of the cylinder in rest position and a sufficient power transmission from cylinder to dump body is achieved during the first part of the tipping movement at the same time as the length of the cylinder is sufficient to lead the dump body to the desired turning position about 45° to horizontal (corresponding to slightly over the slipping angle of the fertilizer).

According to the invention, the lifting-lowering cylinders can form an angle of up to 90° to horizontal, preferably about 75°, when the dump body is in maximal tipping position.

In this placing of the cylinders, the largest possible utilization of stroke length is obtained, so that as small cylinders as possible can be used.

In the following, the invention is further described with reference to the drawing, in which

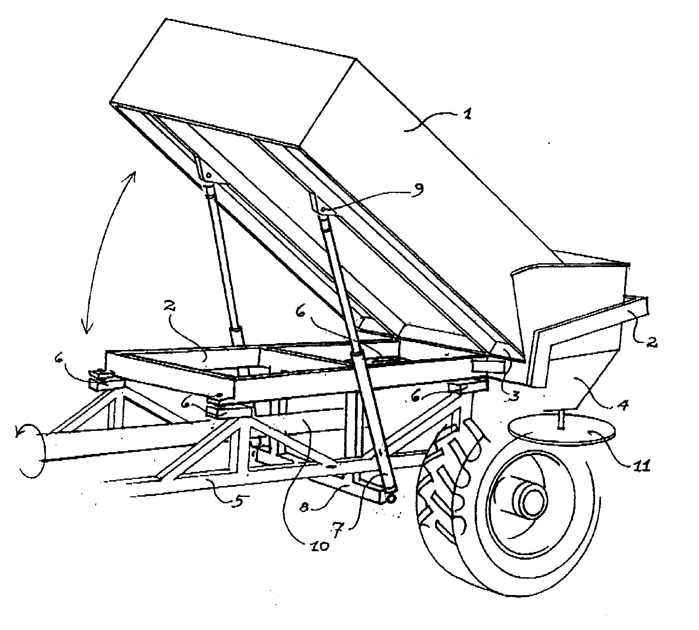

Figure 1 shows an appliance according to the invention pictured inclined and with the dump body close to the maximal tipping position.

On the drawing is shown a wheeled chassis 5, which supports a frame 2, 8 in four corner points and with an intermediary layer of so-called sensors 6. The sensors 6 are arranged so as to give an electrical signal which is a manifestation of the vertical force component between the frame and the chassis and thus for the weight. In the frame 2 a dump body 1 is mounted which is arranged to turn around an axis 5 at the rear end of the vehicle. In the frame 2 is furthermore mounted a spreading aggregate known per se which contains a container 4 open towards the dump body, and one or more spreading discs 11 mounted under the container and receiving fertilizer from the container through an outlet in the bottom thereof, and which are arranged to spread the fertilizer by centrifugal force.

The frame 2 consists of a main part running in a mainly horizontal level and extended to the rear in relation to the dump body for gripping the spreading aggregate 4. The frame comprises furthermore a vertical downwards projecting part at the longitudinal middle section of the frame. The downwards projecting part is connected underneath the chassis 5 with a cross member 8. Working cylinders 7 are fastened to the cross member 8 at each side of the chassis. The working cylinders are fastened at the piston end to the bottom side of the dump body via a pivoting joint 9.

The chassis 5 is constructed as a grate construction with lengthwise and transverse grate bars and a power transmission axle 10 placed in between, said axle running from the front part of the vehicle and arranged to be coupled together with the power take-off of the tractor, and being connected at its other end to the driving member of the spreading aggregate. The power transmission axle collectively is referred to by the reference number 10.

The invention is not restricted to the features just shown and described. Thus, it will be possible to use a centrally placed working cylinder instead of the shown two cylinders at each side of the dump body. Furthermore, it will be possible to fasten the jacket part of the cylinders to the main frame 2 via a pivoting joint connection, for instance at the front part of the main frame, and in this manner the downwards projecting part of the frame and the cross member 8 can be omitted. Furthermore, it is possible to use other types of working cylinders, for instance telescopically acting cylinders.

## Claims

1. Appliance for distributing fertilizer comprising a dump body (1), which is pivotally mounted in a frame (2) at the rear edge (3) of said dump body and arranged to empty successively fertilizer into a spreading aggregate (4) mounted in the frame (2) by activation of at least one lifting-lowering cylinder (7) fastened at one end to the body (1) and at the other end to the frame (2), **characterized** in that the frame (2) is carried by a chassis (5), sensors (6) being placed between the frame (2) and the chassis (5), said sensors (6) arranged to detect the force component transmitted between the frame (2) and the chassis (5).

2. Appliance according to claim 1, **characterized** in that a lifting-lowering cylinder (7) is placed at each side of the dump body (1), and that the cylinders (7) are pivotally fastened to the bottom side of the body in a pivoting joint (9) and to a cross member (8) in the frame (2) in the area above the ground and underneath the bottom side of the chassis (5).

3. Appliance according to claim 2, **characterized** in that the frame (2) consists of a main frame (2) extending mainly in the horizontal level, in which frame the dump body (1) and the spreading aggregate (4) are pivotally deposited and supported, and of a mainly vertical downwards projecting part, which extends through the wheeled chassis (5) and is connected to a cross member (8) extending transversely to the driving direction and placed under the chassis (5).

4. Appliance according to claim 3, **characterized** in that the lifting-lowering cylinders (7) form an angle of mainly 45° to horizontal, when the dump body (1) rests on the frame (2) and the cylinders (7) are in their in-drawn position.

5. Appliance according to claim 4, **characterized** in that the lifting-lowering cylinders (7) form an angle of up to 90° to horizontal, preferably about 75°, when the dump body (1) is in maximal tipping position (Figure 1).

## Patentansprüche

1. Vorrichtung zum Verteilen von Dünger mit einer Kippmulde (1), die an der hinteren Kante (3) der Kippmulde drehbar in einem Rahmen (2) gelagert und derart angeordnet ist, daß mittels Betätigung mindestens eines mit einem Ende an der Kippmulde (1) und mit dem anderen Ende an dem Rahmen (2) befestigten Hub-Senk-Zylinders (7) fortlaufend Dünger in ein in dem Rahmen (2) angeordnetes Streuaggregat (4) geleert wird, dadurch gekennzeichnet, daß der Rahmen (2) von einem Chassis (5) getragen wird und Sensoren (6) zur Erfassung der zwischen dem Rahmen (2) und dem. Chassis (5) übertragenen Kraftkomponente zwischen dem Rahmen (2) und dem Chassis (5) angeordnet sind.

2. Vorrichtung gemäß Anspruch 1, dadurch gekennzeichnet, daß auf jeder Seite der Kippmulde (1) ein Hub-Senk-Zylinder (7) angeordnet ist und daß die Zylinder (7) in einer Gelenkverbindung (9) an der Unterseite der Kippmulde und an einem Querträger (8) in dem Rahmen (2) in dem Bereich oberhalb des Bodens und unterhalb der Unterseite des Chassis (5) drehbar befestigt sind.

3. Vorrichtung gemäß Anspruch 2, dadurch gekennzeichnet, daß der Rahmen (2) aus einem sich im wesentlichen in der horizontalen Ebene erstreckenden Hauptrahmen (2), in welchem die Kippmulde (1) und das Streuaggregat (4) drehbar angeordnet und gelagert sind, und einem im wesentlichen senkrecht nach unten vorragenden Teil besteht, welcher sich durch das mit Rädern versehene Chassis (5) erstreckt und mit einem Querträger (8) verbunden ist, welcher sich quer zur Fahrtrichtung erstreckt und unterhalb des Chassis (5) angeordnet ist.

4. Vorrichtung gemäß Anspruch 3, dadurch gekennzeichnet, daß die Hub-Senk-Zylinder (7) einen Winkel von im wesentlichen 45° zur Horizontalen bilden, wenn die Kippmulde (1) auf dem Rahmen (2) ruht und sich die Zylinder (7) in ihrer eingefahrenen Stellung befinden.

5. Vorrichtung gemäß Anspruch 4, dadurch gekennzeichnet, daß die Hub-Senk-Zylinder (7) einen Winkel von bis zu 90°, vorzugsweise etwa 75° zur Horizontalen bilden, wenn sich die Kippmulde (1) in maximal gekippter Stellung befindet (Figur 1).

## Revendications

1. Dispositif destiné à distribuer de l'engrais, comprenant un corps basculant (1) qui est articulé sur un bâti (2) au droit du bord arrière (3) dudit corps basculant et agencé pour vider progressivement l'engrais dans un groupe d'épandage (4) monté dans le bâti (2) par l'activation d'au moins un vérin élévateur et descendeur (7) fixé au corps à une extrémité et au bâti (2) à l'autre extrémité, caractérisé en ce que le bâti (2) est porté par un châssis (5), des capteurs (6) étant interposés entre le bâti (2) et le châssis (5), lesdits capteurs (6) étant agencés pour détecter la composante de force transmise entre le bâti (2) et le châssis (5).

2. Dispositif selon la revendication , caractérisé en ce qu'un vérin élévateur et descendeur (7) est placé de chaque côté du corps basculant (1) et en ce que les vérins (7) sont articulés sur la face inférieure du corps, au droit d'un joint articulé (9), et à une traverse (8) du bâti (2) dans la région située au-dessus du sol et au-dessous de la face inférieure du châssis (5).

3. Dispositif selon la revendication 2, caractérisé en ce que le bâti (2) est composé d'un bâti principal (2) qui s'étend essentiellement dans un plan horizontal, dans lequel bâti le corps basculant (1) et le groupe d'épandage (4) sont disposés et supportés avec possibilité de pivoter, et d'une partie qui fait saillie à peu près verticalement vers le bas, qui s'étend à travers le châssis sur roues (5) et est reliée à une traverse (8) qui s'étend transversalement à la direction de la marche et est placée sous le châssis (5).

4. Dispositif selon la revendication 3, caractérisé en ce que les vérins élévateurs et descendeurs (7) forment un angle d'environ 45° avec l'horizontale lorsque le corps basculant (1) repose sur le bâti (2) et que les vérins (7) sont dans leur position rétractée.

5. Dispositif selon la revendication 4, caractérisé en ce que les vérins élévateurs et descendeurs (7) forment un angle pouvant atteindre 90°, et qui est de préférence d'environ 75°, avec l'horizontale, lorsque le corps basculant (1) est dans sa position d'inclinaison maximum (figure 1).